# EUROPÄISCHE PATENTSCHRIFT

(11) **EP 0 673 094 B1**
(45) Veröffentlichungstag und Bekanntmachung des Hinweises auf die Patenterteilung: **03.06.1998**
(21) Anmeldenummer: 95102463.7
(22) Anmeldetag: 22.02.1995
(51) Int. Cl.: H02B 1/01, H02B 1/48

(54) **Tiefbauwinkel für Traggerüste für elektrische Verteileranlagen**
Angled fitting device for support structures used in distribution systems
Dispositif angulaire de raccord pour structures de support utilisées dans des systèmes de distribution

(30) Priorität: 03.03.1994 DE 9403601 U
(43) Veröffentlichungstag der Anmeldung: 20.09.1995
(73) Patentinhaber: STRIEBEL & JOHN GmbH & Co. KG, D-77880 Sasbach (DE)
(72) Erfinder: Rapp, Jürgen, Dipl.-Ing. (FH), D-77836 Rheinmünster (DE)
(74) Vertreter: Thoma, Friedrich, Dipl.-Ing.(FH)

(56) Entgegenhaltungen:
- EP-A- 0 043 559
- CH-A- 479 176
- DE-U- 9 403 601
- FR-A- 2 368 812

## Beschreibung

Die Erfindung betrifft einen einstellbaren Tiefbauwinkel für Traggerüste für elektrische Verteileranlagen mit den Merkmalen nach dem Oberbegriff des Patentanspruchs 1, wie er in EP-A-0 043 559 beschrieben ist.

Bei elektrischen Verteileranlagen, insbesondere bei Schalt- und Verteilerschränken sind Traggerüste insbesondere aus C-förmigen vertikal verlaufenden Profilschienen im Einsatz. Für den Einbau von relativ schweren Geräten ist es vorgesehen, sogenannte Geräte-Tragschienen mittels einstellbarer Tiefbauwinkel auf dem Traggerüst aus C-förmigen vertikalen Profilschienen kraftschlüssig lösbar zu befestigen. Dabei ist es erforderlich, daß derartige Tiefbauwinkel nicht nur rationell und wirtschaftlich auf den Profilschienen eines Traggerüstes montierbar, lagenfixierbar und kraftschlüssig befestigbar, sondern auch einfach, insbesondere stufenlos, in der Tiefe verstellbar, sind. Dabei soll sichergestellt sein, daß diese Tiefbauwinkel nicht nur rationell und wirtschaftlich herstellbar, sondern auch auf Profilschienen mit zueinander unterschiedlichem, insbesondere beliebigem, Querschnitt zweckmäßig und zuverlässig einsetzbar sind.

Ein weiterer bekanntgewordener, in der Tiefe einstellbarer, Tiefbauwinkel besteht im wesentlichen aus einem, aus flachbandförmigem Material hergestelltes, rechtwinkeliges Tiefbauwinkelelement, dessen Schenkel unterschiedlich lang sind. Dabei steht der längere Schenkel mit einem, aus zwei Kunststoff-Einzelteilen bestehenden Befestigungselement in Eingriff, bei dem die beiden Einzelteile über schiefe Ebenen zueinander verschiebbar gelagert sind. Dabei ist das Befestigungselement auf der Profilschiene kraftschlüssig befestigt, wobei unter der Wirkung des Schraubbefestigungsmomentes auf die beiden spiegelbildlich formschlüssig aufeinanderliegenden schiefen Ebenen des Befestigungselementes, das dort in Eingriff stehende stufenlos längsverschiebbar gelagerte Tiefbauwinkelelement festgeklemmt wird.

Dieser Tiefbauwinkel ist mit dem Nachteil behaftet, daß die dort zum Einsatz kommenden beiden Kunststoff-Einzelteile nicht nur werkzeugaufwendig und relativ teuer in der Herstellung sind, sondern daß die dort auf den Tiefbauwinkel wirkende Klemmkraft vielfach den auftretenden Dauerbelastungen nicht standhält.

Der Erfindung liegt die Aufgabe zugrunde, einen Tiefbauwinkel der eingangsgenannten Art zu schaffen, bei dem die Nachteile des bekannten Tiefbauwinkel beseitigt sind, und der nicht nur einfach, rationell und wirtschaftlich herstellbar und montierbar ist, sondern der auch auf Tragschienen mit zueinander unterschiedlichem Querschnitt dauerhaft zuverlässig, insbesondere stufenlos einstellbar, kraftschlüssig befestigbar ist.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft bei diesem Tiefbauwinkel ist nicht nur, daß das Befestigungselement als U-förmiger Tiefbaubügel ausgebildet ist, der insbesondere aus einem rechteckförmigen Flachmaterial geprägt, hergestellt, einerseits mit einer einseitigen, insbesondere rechtwinkelig abgekanteten Befestigungslasche mit dort vorgesehener Befestigungsschraube und andererseits mit einer zur Befestigungslasche hin gerichteten, schräg verlaufend angeordneten, einseitige Lasche, versehen ist, wobei im Abkantbereich der beiden Laschen, zueinander fluchtende Durchbrüche für den Eingriff, die Lagenfixierung und Lagerführung des Tiefbauwinkelelementes vorgesehen sind. Dabei wird beim Anziehen der Befestigungsschraube die schrägverlaufende Lasche hinter einen der Stege oder Kanten der Profilschiene gezogen, sodaß die innen liegende Seite des Tiefbaubügels zur einen äußeren Seite der Profilschiene verschoben wird, wobei das dazwischen liegende Tiefbauwinkelelement kraftschlüssig zwischen dem Tiefbaubügel und der Profilschiene kraftschlüssig lösbar, eingespannt wird. Vorteilhaft ist ferner nicht nur die rationelle und wirtschaftliche Herstellung des Ganzen, sondern auch die einfache, universelle und dauerhaft zuverlässige Montage insbesondere auf C-förmige Profilschienen, sowie die einfache, dort von der Montagevorderseite her durchführbare stufenlose Tiefenverstellung des Tiefbauwinkelementes und dessen kraftschlüssige Befestigung.

Einige Ausführungs- und Anwendungsbeispiele sind in den Zeichnungen dargestellt und werden im folgenden näher erläutert. Es zeigen
- Fig. 1: eine schaubildliche Ansicht der Einzelteile des Tiefbauwinkels,
- Fig. 2: eine schaubildliche Ansicht des Tiefbauwinkels auf einer Profilschiene, in nichtkraftschlüssiger Montagelage,
- Fig. 3: eine schaubildliche Ansicht des Tiefbauwinkels auf einer Profilschiene, in kraftschlüssiger Montagelage.
- Fig. 4: eine schaubildliche Ansicht eines Tiefbauwinkels in einer funktionskonformen Anordnung auf einer Profilschiene eines Traggerüstes,
- Fig. 5: eine schaubildliche Ansicht des Tiefbauwinkels auf einer C-förmigen Profilschiene,
- Fig. 6: eine schaubildliche Ansicht des Tiefbauwinkels auf einer Profilschiene mit rechteckförmig geschlossenem Querschnitt,
- Fig. 7: eine schaubildliche Ansicht des Tiefbauwinkels auf einer Profilschiene mit rechteckförmigem, schmalseitig gelochtem, Querschnitt,
- Fig. 8: eine schaubildliche Ansicht des Tiefbauwinkels auf einer Winkelprofilschiene,
- Fig. 9: eine schaubildliche Ansicht des Tiefbauwinkels auf einer d-förmigen Profilschiene,
- Fig. 10: eine schaubildliche Ansicht des Tiefbauwinkels auf einer C-Profilschiene und
- Fig. 11: eine schaubildliche Ansicht des Tiefbauwinkels mit einer rechtwinkelig verlaufenden Lasche am Tiefbaubügel, im Eingriff mit einer C-Profilschiene.

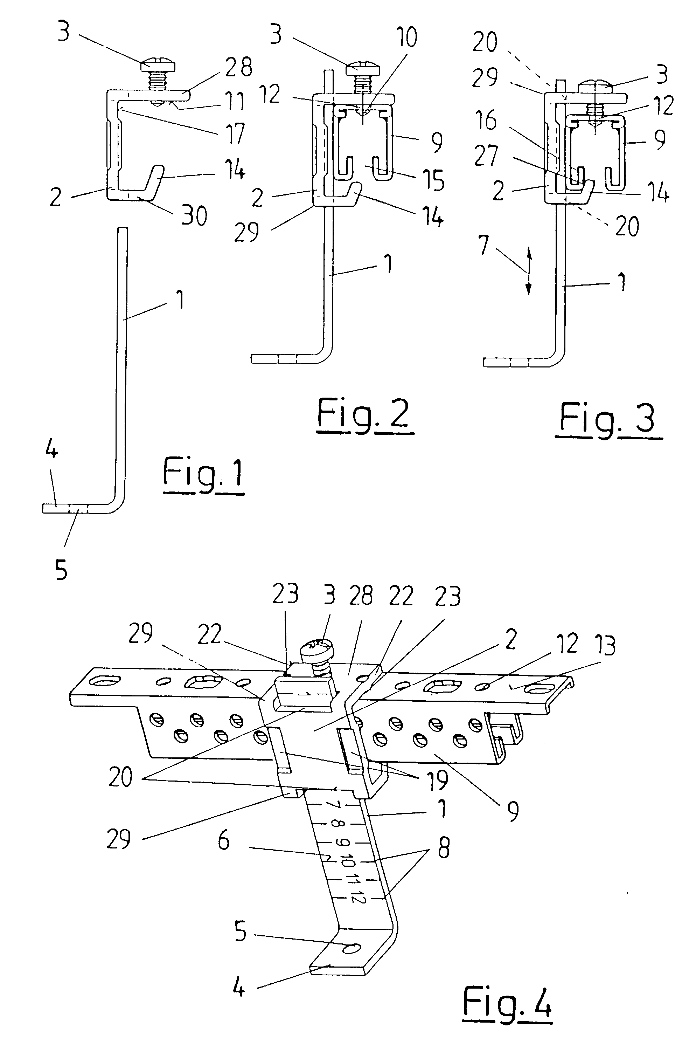

Der, in den Fig. 1 bis 10 dargestellte, insbesondere aus der Fig. 1, in den Einzelteilen ersichtliche, Tiefbauwinkel besteht im einzelnen aus dem Tiefbauwinkelelement 1, das mit dem sogenannten Tiefbaubügel 2 in Eingriff steht und dort längsverschiebbar geführt, in Pfeilrichtung 7, insbesondere stufenlos, einstellbar ist. 3 bezeichnet eine Befestigungsschraube, die mit dem Tiefbaubügel 2 in Eingriff steht.

Das Tiefbauwinkelement 1 ist insbesondere aus einem flachbandförmigen metallischen Material hergestellt und einseitig mit einer, insbesondere im rechten Winkel abgekanteten, Lasche 4 versehen, in der insbesondere ein Befestigungsloch 5 angeordnet ist. Mindestens auf einer der Oberflächen 6 des Tiefbauwinkelelementes 1 ist eine Markierung 8 zum genauen Einstellen des Tiefbauwinkelelementes 1 gegenüber dem insbesondere U-förmig ausgebildeten Tiefbaubügel 2 vorgesehen, der ebenfalls aus einem rechteckförmigen Flachmaterial geprägt, hergestellt ist. 28 bezeichnet dort die einseitig vorgesehene Befestigungslasche in der ein Gewinde für eine Befestigungsschraube 3 vorgesehen ist. Die Befestigungslasche 28 ist insbesondere im rechten Winkel abgekantet.

Der Befestigungslasche 28 insbesondere parallelverlaufend gegenüberliegend ist eine zur inneren Seitenfläche 17 des Tiefbaubügels 2 angeordnete Abkantung 30 vorgesehen, die mit einer zur Lasche 28 hin gerichteten, schräg verlaufenden, einseitigen Lasche 14 versehen ist.

Für den Eingriff des Tiefbauwinkelementes 1 im Tiefbaubügel 2 sind im Tiefbaubügel 2, insbesondere im jeweiligen rechtwinkeligen Abkantbereich 29, rechteckig ausgebildete Durchbrüche 20 vorgesehen, für den Durchgriff des mit einem rechteckigen Querschnitt versehenen Tiefbauwinkelelementes 1. Die Durchbrüche 20 sind dort in der Breite etwas größer, als die Dicke des Flachmaterials des Tiefbauwinkelelementes 1.

Aus den Fig. 2 bis 4 ist im wesentlichen die rationelle und zweckmäßige Montage insbesondere auf einer C-förmigen, vertikalen, Profilschiene 9 ersichtlich.

Nach Fig. 2 wird zunächst der vormontierte Tiefbauwinkel mit der Befestigungsschraube 3, insbesondere mit der dort vorgesehenen, die Unterseite 11 des Tiefbaubügels 2 leicht überragenden Suchspitze 10 in das den Montageerfordernissen entsprechende Fixier- und Befestigungsloch 12 auf der Vorderseite 13 der Profilschiene 9 eingehängt. Durch Anziehen der Befestigungsschraube 3 wird der Tiefbaubügel 2 mit der, der Befestigungsschraube 3 gegenüber liegend einseitig angeformten, schrägverlaufenden, insbesondere um einen Winkel von ca. 70° geneigten, Lasche 14, in die Nut 15 zwischen den Stegen 16 der Profilschiene 9 gezogen, sodaß die innere Seitenfläche 17 des Tiefbaubügels 2 mit dem dort zwischen der Seitenfläche 17 und der Außenfläche 18 der Profilschiene 9 verlaufend angeordneten Tiefbauwinkelelement 1, im angezogenen Zustand der Befestigungsschraube 5 kraftschlüssig eingeklemmt wird, wie dies aus der Fig. 3 anschaulich ersichtlich ist. Die schrägverlaufende Lasche 14 stützt sich dabei auf der inneren Kante 27 des benachbarten Steges 16 ab.

19 zeigt zwei zueinander parallel verlaufend angeordnete Führungslaschen, die am Tiefbaubügel 2 angeformt, zur Profilschiene 9 hin gerichtet sind, zur Lagerführung des Tiefbauwinkelementes 1. Diese Führungslaschen 19 stellen sicher, daß das Tiefbauwinkelement 1 hinreichend präzise, gradlinig im Tiefbaubügel 2 fixiert und geführt ist. Außerdem sind im Bereich der oberseitigen Befestigungslasche 28 des Tiefbaubügels 2, im Bereich der beiden Seitenränder 22, stoffschlüssig nach innen gezogene einseitige Führungsbolzen 23 vorgesehen für den Eingriff in die Fixier- und Befestigungslöcher 12 auf der Vorderseite 13 der Profilschiene 9. Diese Führungsbolzen 23 dienen dort nur der hilfsweisen Montage des Tiefbaubügels auf einer Profilschiene 9. Diese Führungsbolzen 23 kommen außer Eingriff mit den Fixier- und Befestigungslöcher 12, sobald die Befestigungsschraube 3 kraftschlüssig angezogen wird.

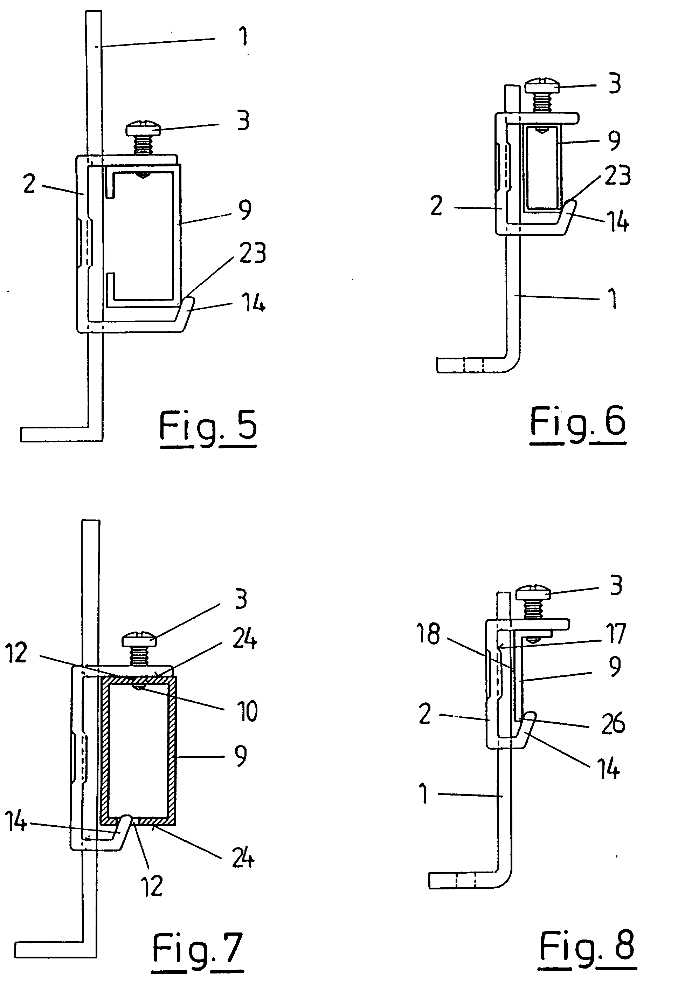

Die Fig. 5 bis 10 zeigen Montageanordnungen des neuen Tiefbauwinkels auf Profilschienen 9 mit zueinander unterschiedlichen Querschnitten. Dementsprechend sind zu den einzelnen Querschnitten der Profilschienen 9 geringfügig unterschiedliche Abmessungsunterschiede, insbesondere hinsichtlich der einseitigen Länge der schrägverlaufenden Lasche 14 vorgesehen. Die generelle Funktionsweise zur kraftschlüssigen Montage dieses neuen Tiefbauwinkels für die einzelnen Profilschienenquerschnitte ist jedoch in jedem der einzelnen Fälle sichergestellt.

Die Fig. 5 zeigt einen Tiefbauwinkel auf einer C-förmigen Profilschiene 9, bei der die schrägverlaufende Lasche 14 des Tiefbaubügels 2 hinter die eine Außenkante 23 der Profilschiene 9 greift. 1 zeigt das Tiefbauwinkelelement und 3 die Befestigungsschraube.

Auch bei der Tiefbauwinkelmontage nach Fig. 6 greift die schrägverlaufende Lasche 14 hinter eine Außenkante 23 der mit einem geschlossenen rechteckigen Querschnitt versehenen Profilschiene 9.

Die Fig. 7 zeigt eine Profilschiene 9 mit einem geschlossenen rechteckigen Querschnitt, bei der die einander gegenüberliegenden beiden Schmalseiten 24 der Profilschiene 9 mit Löchern 12 für den Eingriff einerseits der schrägverlaufenden Lasche 14 und andererseits für die Suchspitze 10 der Befestigungsschraube 3 versehen ist.

Aus der Fig. 8 ist eine Profilschiene 9 mit einem rechtwinkeligen, L-förmigen, Querschnitt ersichtlich. Dabei greift dort der Tiefbaubügel 2 des zur Befestigung vorgesehene Tiefbauwinkels mit seiner schrägverlaufende Lasche 14 hinter die einseitige Kante 26 der Profilschiene 9 und klemmt beim Anziehen der Befestigungsschraube 3 das Tiefbauwinkelelement 1 zwischen die Außenfläche 18 der Profilschiene 9 und die innere Seitenfläche 17 des Tiefbaubügels 2 ein. Auf der Schmalseite 24 der Profilschiene 9 sind zweckmäßigerweise Fixier- und Befestigungslöcher 12 für den Eingriff der Suchspitze 10 der Befestigungsschraube 3 vorgesehen.

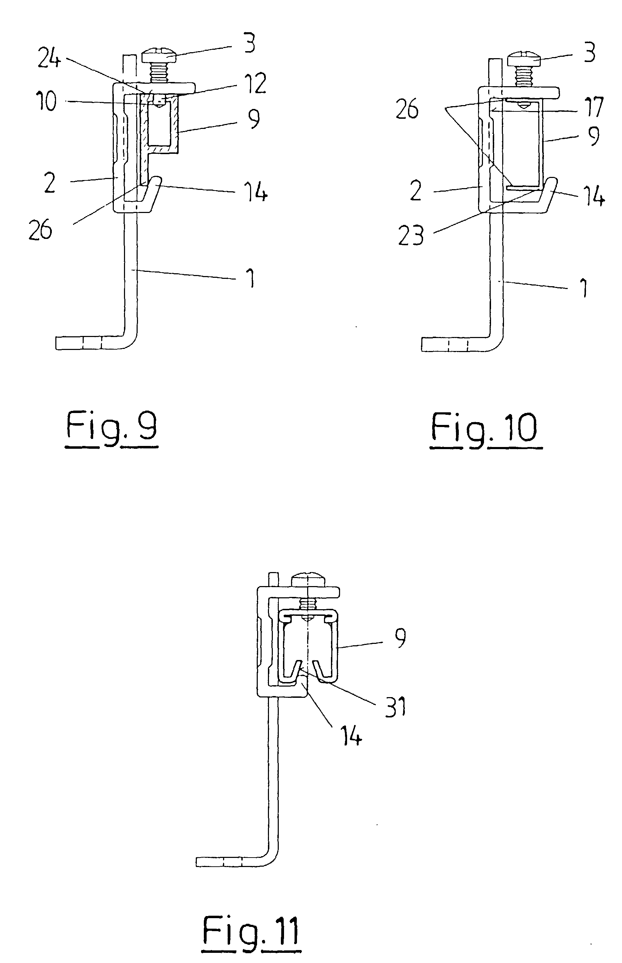

Die Fig. 9 zeigt einen Tiefbauwinkel, der auf einer Profilschiene 9 mit einem d-förmigen Querschnitt versehen ist. Die schrägverlaufende Lasche 14 des Tiefbaubügels 2 greift dort zur Befestigung des Tiefbauwinkelelementes 1 hinter die einseitige Kante 26 der Profilschiene 9. 3 bezeichnet die Befestigungsschraube, deren Suchspitze 10 wiederum in Fixier- und Befestigungslöcher 12 auf der Schmalseite 24 der Profilschiene 9 steht.

Die Fig. 10 zeigt einen Tiefbauwinkel, der auf einer Profilschiene 9 mit einem C-förmigen Querschnitt angeordnet und befestigt ist. Dabei greift die schrägverlaufende Lasche 14 des Tiefbaubügels 2 hinter die eine Außenkante 23 der Profilschiene 9. Durch das Anziehen der Befestigungsschraube 3 wird das Tiefbauwinkelemenet 1 einerseits zwischen der inneren Seitenfläche 17 und andererseits zwischen den Profilkanten 26 der Profilschiene 9 kraftschlüssig festgeklemmt.

Es liegt im Rahmen der Erfindung, daß die Lasche 14 jeden zweckmäßigen Steigungswinkel aufweisen kann. In diesem Zusammenhange ist es auch vorgesehen, wie dies aus der Fig. 11 ersichtlich ist, daß die Lasche 14 rechtwinkelig abgewinkelt sein kann, wenn die abgewinkelte Lasche 14, zum Befestigen des Tiefbauwinkels, auf eine entsprechende Schräge 31 an der Profilschiene 9 einwirken kann.

## Patentansprüche

1. Tiefbauwinkel, mit einem Befestigungselement, mit einem, mit dem Befestigungselement (2) in Eingriff stehenden, stufenlos einstellbaren Tiefbauwinkelelement (1), und mit einer Befestigungsschraube (3), für die kraftschlüssige Befestigung des Tiefbauwinkels auf Traggerüsten von elektrischen Verteileranlagen, **dadurch gekennzeichnet**, daß das Befestigungselement als U-förmiger Tiefbaubügel (2), insbesondere aus einem rechteckförmigen Flachmaterial geprägt, hergestellt, einerseits mit einer einseitigen, insbesondere rechtwinkelig abgekanteten, Befestigungslasche (28) mit dort vorgesehener Befestigungsschraube (3) und andererseits mit einer, zur Lasche (28) hin gerichteten, schräg verlaufend angeordneten, einseitigen Lasche (14) versehen ist, und daß im jeweiligen Abkantbereich (29) der beiden Laschen (14 und 28) des Tiefbaubügels (2) zueinander fluchtende Durchbrüche (20) für den Eingriff, die Lagenfixierung und Lagerführung des Tiefbauwinkelelementes (1) vorgesehen sind.

2. Tiefbauwinkel nach Anspruch 1, dadurch gekennzeichnet, daß die Lasche (14) unter einem Winkel von ca. 70° einseitig geneigt angeordnet ist.

3. Tiefbauwinkel nach Anspruch 1 und 2, dadurch gekennzeichnet, daß am Tiefbaubügel (2), zwischen den beiden Abkantbereichen (29), nach innen gerichtete, längsverlaufende Führungslaschen (19) für das Tiefbauwinkelelement (1), insbesondere einstückig ausgeprägt, angeordnet sind.

4. Tiefbauwinkel nach Anspruch 1 bis 3, dadurch gekennzeichnet, daß im Bereich der beiden Seitenränder (22) der Befestigungslasche (28) des Tiefbaubügels (2), insbesondere einstückig nach innen gezogene, einseitige Führungsbolzen (23) für den Eingriff in die Fixier- und Befestigungslöcher (12) auf einer Profilschiene (9) vorgesehen sind.

5. Tiefbauwinkel nach Anspruch 1 bis 4, dadurch gekennzeichnet, daß die Befestigungsschraube (3) einseitig vor dem Schraubgewinde insbesondere mit einer Suchspitze (10) versehen ist.

6. Tiefbauwinkel nach Anspruch 1 bis 5, dadurch gekennzeichnet, daß das Tiefbauwinkelelement (1) zwischen der inneren Seitenfläche (17) des Tiefbaubügels (2) und einer Außenfläche (18) einer Profilschiene (9) funktionskonform angeordnet und kraftschlüssig einklemmbar lagenfixiert ist.

## Claims

1. Low-level bracket, comprising a fastening element, a steplessly adjustable low-level bracket element (1) standing in engagement with the fastening element (2), and a fastening screw (3) for the force-locking fastening of the low-level bracket on support structures of electrical distributor systems, characterised thereby that the fastening element constructed as U-shaped low-level stirrup (2), especially pressed from a rectangular-shaped flat material, is provided on the one hand with an end fastening strap (28), which is in particular bent-over at right angles, with the fastening screw (3) provided there and on the other hand with an end strap (14) oriented towards the strap (28) and arranged to extend obliquely, and that mutually aligned passage openings (20) for the engagement, positional fixing and mounting guidance of the low-level bracket element (1) are provided in the respective bent-over region (29) of each of the two straps (14 and 28) of the low-level stirrup (2)

2. Low-level bracket according to claim 1, characterised thereby that the strap (14) is arranged inclined at the end by an angle of about 70°.

3. Low-level bracket according to claim 1 and 2, characterised thereby that inwardly directed and longitudinally extending guide straps (19) for the low-level bracket element (1) are arranged, in particular integrally pressed out, at the low-level stirrup (2) between the two bent-over regions (29).

4. Low-level bracket according to claims 1 to 3, characterised thereby that guide pins (23), in particular drawn inwardly in one piece, for engagement on the fixing and fastening holes (12) on a profile rail (9) are provided at the end in the region of the two side edges (22) of the fastening strap (28) of the low-level stirrup (2).

5. Low-level bracket according to claims 1 to 4, characterised thereby that the fastening screw (3) is provided at the end in front of the screw thread in particular with a locating point (10).

6. Low-level bracket according to claims 1 to 5, characterised thereby that the low-level bracket element (1) is arranged between the inner side surface (17) of the low-level stirrup (2) and an outer surface (18) of a profile rail (9) in conformity with function and fixed in position by being force-lockingly clampable.

## Revendications

1. Equerre de montage comportant : un élément de fixation, un élément en forme d'équerre en prise avec l'élément de fixation (2), et réglable progressivement, et une vis de fixation (3) pour fixer de manière dynamiquement solidaire l'équerre de montage sur des structures portantes d'installations de distribution d'électricité, caractérisée en ce que l'élément de fixation est réalisé sous la forme d'un étrier (2) en forme de U, en particulier estampé en un matériau plat de forme rectangulaire, qui est muni d'une part d'une patte de fixation (28) unilatérale, en particulier repliée en angle droit avec présence d'une vis de fixation (3), et d'autre part d'une patte unilatérale (14) orientée en direction de la patte (28) et s'étendant obliquement, et en ce que dans la zone de repli respective (20) des deux pattes (14 et 28) de l'étrier (2), sont prévus des orifices (20) alignés mutuellement pour l'insertion, la fixation en position et le guidage d'appui de l'élément en forme d'équerre (1).

2. Equerre de montage selon la revendication 1, caractérisée en ce que la patte (14) est disposée sous une inclinaison unilatérale selon un angle d'environ 70°.

3. Equerre de montage selon les revendications 1 et 2, caractérisée en ce que sur l'étrier (2), entre les deux zones de repli (29), sont disposées des pattes de guidage (19) s'étendant longitudinalement, dirigées vers l'intérieur, pour l'élément (1), ces pattes étant notamment estampées en une seule pièce.

4. Equerre de montage selon les revendications 1 à 3, caractérisée en ce qu'au voisinage des deux bords latéraux (22) de la patte de fixation (28) de l'étrier (2) sont prévus des boulons de guidage (23), unilatéraux, en particulier vissés en une seule pièce vers l'intérieur, destinés à pénétrer dans les trous de fixation (12) pratiqués sur un rail profilé (9).

5. Equerre de montage selon les revendications 1 à 4, caractérisée en ce que la vis de fixation (3) est munie unilatéralement, avant son filetage, d'une pointe chercheuse (10).

6. Equerre de montage selon les revendications 1 à 5, caractérisée en ce que l'élément (1) est disposé entre la face latérale interne (17) de l'étrier (2) et une face externe (18) d'un rail profilé (9), de manière conforme à sa fonction, enserrable de manière fixe et dynamiquement solidaire dans sa position.
